# EUROPÄISCHE PATENTANMELDUNG

(11) **EP 4 738 663 A1**
(43) Veröffentlichungstag der Anmeldung: **06.05.2026**
(21) Anmeldenummer: 25209015.4
(22) Anmeldetag: 16.10.2025
(51) Int. Cl.: H02K 3/52, H02K 15/122, H02K 15/022, H02K 1/24

(54) **ROTOR EINES ELEKTROMOTORS SOWIE VERFAHREN ZU DESSEN FERTIGUNG**

(30) Priorität: 29.10.2024 DE 102024210424
(71) Anmelder: Volkswagen Aktiengesellschaft, 38440 Wolfsburg (DE)
(72) Erfinder: Shaghaghi, Arash, 38440 Wolfsburg (DE); Deubner, Christian, 38440 Wolfsburg (DE); Cornelius, Volker, 38440 Wolfsburg (DE); Scheffer, Markus, 38440 Wolfsburg (DE); Porabka, Thomas, 38440 Wolfsburg (DE); Adzic, Ljubomir, 38440 Wolfsburg (DE); Prokoph, Stefan, 38440 Wolfsburg (DE)

(57) **Zusammenfassung**

Die Erfindung betrifft einen Rotor (1) eines Elektromotors, wobei der Rotor (1) ein auf einer Rotorwelle (2) des Rotors (1) angeordnetes Rotorpaket (3) und das Rotorpaket (3) ein Rotorjoch (4) sowie eine Mehrzahl Rotorzähne (5) umfasst, welche jeweils eine Erregerwicklung (6) tragen. Hierbei weist der Rotor (1) zudem wenigstens zwei zumindest das Rotorpaket (3) in Umfangsrichtung (19) des Rotors (1) zergliedernde Segmente (7, 8) auf, wobei ein jeweiliges Segment (7, 8) wenigstens einen Rotorzahn (5) mitsamt dessen Erregerwicklung (6) sowie zumindest eine Teilmenge der Segmente (7, 8) einen mit einem jeweiligen Rotorzahn (5) des Segments (7, 8) einteilig ausgeführten Abschnitt (30) des Rotorjochs (4) umfasst. Dabei sind die Segmente (7, 8) miteinander über eine kraft- und/oder formschlüssige Verbindung (11) gefügt. Dabei ist die Verbindung (11) zumindest teilweise dadurch etabliert, dass die Segmente (7, 8) durch eine auf das Rotorpaket (3) wirkende Kraft (F) gegeneinander verklemmt sind, wobei die Kraft (F) aufgrund einer zwischen Rotorpaket (3) und Rotorwelle (2) vorliegenden Welle-Nabe-Verbindung (20) ausgebildet ist. Weiterhin betrifft die Erfindung ein Verfahren zur Fertigung des Rotors (1).

## Beschreibung

Die Erfindung betrifft einen Rotor eines Elektromotors, wobei der Rotor ein auf einer Rotorwelle des Rotors angeordnetes Rotorpaket und das Rotorpaket ein Rotorjoch sowie eine Mehrzahl Rotorzähne umfasst, welche jeweils eine Erregerwicklung tragen. Hierbei weist der Rotor zudem wenigstens zwei zumindest das Rotorpaket in Umfangsrichtung des Rotors zergliedernde Segmente auf, wobei ein jeweiliges Segment wenigstens einen Rotorzahn mitsamt dessen Erregerwicklung sowie zumindest eine Teilmenge der Segmente einen mit einem jeweiligen Rotorzahn des Segments einteilig ausgeführten Abschnitt des Rotorjochs umfasst. Die Segmente sind dabei miteinander über eine kraft- und/oder formschlüssige Verbindung gefügt.

Weiterhin betrifft die Erfindung ein Verfahren zur Fertigung eines Rotors.

Fremderregte Synchronmaschinen sind in der Industrie aufgrund ihrer präzisen Steuerbarkeit und hohen Effizienz weit verbreitet. Im Gegensatz zu permanenterregten Synchronmaschinen sind sie nicht auf Permanentmagnete und/oder die dafür benötigten Rohstoffe, insbesondere Seltenerdmetalle, angewiesen. Dies ermöglicht es, auch bei einer Verknappung dieser Rohstoffe, den Bedarf an Antrieben, beispielsweise in der Automobilindustrie, durch fremderregte Synchronmaschinen zu decken.

Allerdings ist die Herstellung des Rotors für fremderregte Synchronmaschinen mit einem erheblichen Aufwand verbunden. Üblicherweise werden die Spulenwicklungen mithilfe der Nadelwicklungstechnik auf ein Rotorpaket gewickelt, das aus einstückigen Rotorblechen besteht. Im Vergleich zu Verfahren wie dem Flyer-Wickeln oder der Linearwickeltechnik ist dieser Prozess deutlich langsamer, was die Produktionszeit für eine fremderregte Synchronmaschine verlängert. Aufgrund der mechanischen Einschränkungen der Nadelwicklung, insbesondere des benötigten Platzes für die Nadel im Wicklungsbereich, ist die Wicklungsdichte oft geringer als bei anderen Techniken, was zu einem niedrigeren Wicklungs- und/oder Leiterfüllfaktor und damit zu einer reduzierten Leistungsfähigkeit führt.

Um diese Problematiken zu adressieren, sind bereits Lösungsansätze aus dem Stand der Technik bekannt.

Die DE 10 2021 122 066 A1 gibt beispielsweise einen Rotor einer fremderregten Synchronmaschine an, wobei an den Enden eines Blechpakets des Rotors Sternscheiben angeordnet sind, von denen zumindest eine Sternscheibe eingebettete Stromschienen aufweist. Diese Stromschienen verbinden jeweils einen Polschuh oder eine Nut der Sternscheibe mit einem dazu benachbarten Polschuh oder einer dazu benachbarten Nut der Sternscheibe elektrisch leitend und weisen an ihren beiden Enden jeweils ein Kontaktierelement zur Aufnahme eines Wicklungsdrahts auf, das aus der Oberfläche der Sternscheibe herausragt. Die Kontaktierelemente stellen dabei Schnittstellen zwischen einer auf dem Rotor gewickelten Spule und den Stromschienen dar. Über die Sternscheiben lässt es sich dabei vermeiden, dass der Draht der Wicklungen der Spule mit einem trapezförmigen Wicklungsaufbau zum Joch zurückgeführt werden muss, sondern der Stromkreis über die Stromschienen der Sternscheiben geschlossen wird. So lässt sich zwar die Effizienz und Leistungsdichte der Synchronmaschine erhöhen, in nachteiliger Weise müssen die Wicklungen aufgrund der einteiligen Ausgestaltung des Rotorpakets aber dennoch mittels Nadelwickeltechnik auf das Rotorpaket aufgebracht werden.

Weiterhin beschreibt die DE 10 2020 107 830 A1 einen Rotor für eine fremderregte Synchronmaschine, welcher einen zylindrischen Grundkörper mit mehreren axial verlaufenden Verbindungsnuten umfasst. Dabei sind mehrere radial am Grundkörper angeordnete Rotorzähne aus einem magnetischen Material in die Verbindungsnuten eingesetzt, wobei diese in radialer Richtung eine ringförmig abschließende Form ausbilden. Um einen jeweiligen Rotorzahn ist dabei eine elektrische Wicklung ausgeführt. Die Wicklung lässt sich dabei vor dem Fügen der Rotorzähne mit dem Grundkörper auf die Rotorzähne aufbringen. Hierdurch kann ein höherer Kupferfüllfaktor im Rotor erzielt werden, da, aufgrund eines nicht vorzusehenden Vorhalts für eine Nadel oder ein Werkzeug, der Wickelbereich eines jeweiligen Rotorzahns komplett vollgewickelt werden kann. Darüber hinaus können zueinander benachbarte Rotorzähne mittels eines Backlacks miteinander verbunden, insbesondere vollflächig verklebt sein. In radialer Richtung ist um die Rotorzähne zudem eine Hülse angeordnet, welche aus einem amagnetischen Material, insbesondere einem karbonfaserverstärktem Kunststoff besteht. Die Hülse lässt sich auf die ringförmig abschließende Form aufbringen, hält somit die Rotorzähne am Grundkörper und nimmt bei hohen Drehzahlen auf den Grundkörper und die Rotorzähne wirkende Fliehkräfte auf.

Durch die DE 10 2022 204 361 A1 ist ein weiterer Rotor für eine fremderregte Synchronmaschine bekannt, bei dem der Wicklungsträger nicht aus einzelnen, einstückig geformten Blechteilen besteht, sondern aus mindestens zwei Teilsegmenten, die über Stifte gelenkig miteinander verbunden sind. Diese Teilsegmente können ebenfalls als Blechstanzteile gefertigt werden, wobei mehrere solcher Blechstanzteile in Axialrichtung aufeinandergestapelt werden, um das jeweilige Teilsegment zu bilden. Ein Vorteil dieser Teilsegmente ist, dass die um das jeweilige Teilsegment gewickelte Rotorwicklung jeweils auf einem separierten Teilsegment hergestellt und dadurch auf die Nadelwickeltechnik oder die Herstellung der Rotorwicklungen mit der Hair-Pin-Technologie verzichtet werden kann. Die Rotorwicklung wird dabei um einen Steg des jeweiligen Teilsegments gewickelt. Vorzugsweise sind die einzelnen Blechteile der Teilsegmente oder die Teilsegmente selbst als Gleichteile ausgeführt, sodass dieselbe Blechstanzmaschine und Wickelvorrichtung für die Herstellung der Rotorwicklungen verwendet werden können. Jedes Teilsegment besitzt zwei äußere Arme sowie einen inneren Arm und den dazwischen liegenden Steg. Zwei benachbarte Teilsegmente sind jeweils über ihre äußeren Arme und zusätzlich über den inneren Arm durch Stifte gelenkig miteinander verbunden. Die Stege des Rotors haben in Radialrichtung eine gleichbleibende Breite, was das Wickeln der Rotorwicklungen um die Stege erleichtert. Die Rotorwicklungen zweier benachbarter Teilsegmente können zudem miteinander in Kontakt kommen, sodass die die Rotorwicklungen aufnehmende, durch zwei benachbarte Stege und zwei miteinander verbundene äußere Arme begrenzte Ausnehmung vollständig mit Rotorwicklungen gefüllt sein kann. Dadurch lässt sich ein hoher Kupferfüllfaktor und somit eine hohe Leistungsfähigkeit einer mit diesem Rotor ausgestatteten Synchronmaschine erzielen.

Die Verwendung solcher zusätzlicher Verbindungselemente, wie den Stiften der beschriebenen Lösung haben jedoch Nachteile hinsichtlich der mechanischen und magnetischen Eigenschaften des Rotors und/oder eines den Rotor aufweisenden Elektromotors. So kann beispielsweise die Laufruhe des Rotors und/oder, insbesondere durch Streuflüsse an den Verbindungselementen, der Magnetfluss im Rotor negativ beeinflusst werden.

Vor diesem Hintergrund liegt der Erfindung die Aufgabe zugrunde, den Rotor der eingangs genannten Art ohne zusätzliche Verbindungselemente zur Verbindung der Segmente des Rotors auszuführen. Weiterhin liegt der Erfindung die Aufgabe zugrunde, ein Verfahren zur Herstellung dieses Rotors bereitzustellen.

Diese Aufgabe wird gelöst mit einem Rotor gemäß den Merkmalen des Patentanspruchs 1 sowie eines Verfahrens gemäß den Merkmalen des Patentanspruchs 12. Die Unteransprüche betreffen besonders zweckmäßige Weiterbildungen der Erfindung.

Erfindungsgemäß ist also ein Rotor eines Elektromotors, insbesondere einer fremderregten Synchronmaschine, vorgesehen, wobei der Rotor ein auf einer Rotorwelle des Rotors angeordnetes Rotorpaket und das Rotorpaket ein Rotorjoch sowie eine Mehrzahl Rotorzähne umfasst, welche jeweils eine Erregerwicklung tragen. Die Rotorzähne selbst weisen dabei einen Zahnkopf oder auch Polschuh und einen Zahnschaft auf, auf welchen die Erregerwicklung aufgebracht ist.

Der Rotor weist zudem wenigstens zwei, bevorzugt mehr als zwei, besonders bevorzugt mehrere, zumindest das Rotorpaket in Umfangsrichtung des Rotors zergliedernde Segmente auf, wobei ein jeweiliges Segment wenigstens einen Rotorzahn mitsamt dessen Erregerwicklung sowie zumindest eine Teilmenge der Segmente einen mit einem jeweiligen Rotorzahn des Segments einteilig ausgeführten Abschnitt des Rotorjochs umfasst. Dabei sind die Segmente miteinander über eine kraft- und/oder formschlüssige Verbindung gefügt.

Zudem ist die Verbindung erfindungsgemäß zumindest teilweise dadurch etabliert, dass die Segmente durch eine, vorzugsweise radial auf das Rotorpaket, hierbei insbesondere die Segmente des Rotorpakets wirkenden Kraft gegeneinander verklemmt sind. Die Segmente sind dabei insbesondere zumindest radial und/oder in Umfangsrichtung gegeneinander verklemmt. Grundsätzlich ist die Verbindung respektive ein Anteil der Verbindung zwischen den Segmenten somit zumindest axial kraftschlüssig ausgestaltet. Radial, hierbei insbesondere radial nach außen und/oder in Umfangsrichtung, liegt zumindest eine formschlüssige Verbindung respektive ein formschlüssiger Anteil der Verbindung vor. Die Kraft über welche die Segmente gegenseitig verklemmt respektive geklemmt sind, ist hierbei erfindungsgemäß aufgrund einer zwischen Rotorpaket und Rotorwelle vorliegenden Welle-Nabe-Verbindung, insbesondere einer Pressverbindung und/oder Klemmverbindung ausgebildet.

Derart wird ein im Grunde selbsttragender, segmentierter Rotor bereitgestellt, welcher ohne weitere Verbindungselemente zur Verbindung der Segmente des Rotors auskommt, was im Wesentlichen optimale mechanische sowie magnetische Eigenschaften des Rotors und/oder eines den Rotor aufweisenden Elektromotors gewährleistet. Zudem kann durch die Ausgestaltung des Rotors mit Segmenten eine Fertigung des Rotors mit verringertem Fertigungsaufwand, insbesondere einer verringerten Fertigungszeit und minimierten Fertigungskosten sichergestellt werden, da aufgrund der Segmente insbesondere auf eine aufwändige und zeitintensive Nadelwickeltechnik verzichtet werden kann. So wird weiterhin auch ein hoher Wicklungs- und/oder Leiterfüllfaktor des Rotors verwirklicht, wodurch eine höhere Effizienz und/oder Leistungsfähigkeit eines den erfindungsgemäßen Rotor aufweisenden Elektromotors gegenüber Elektromotoren mit einstückigen, nicht segmentierten Rotoren gegeben ist.

Es wäre zwar grundsätzlich denkbar, dass ein jeweiliges Teilstück des Rotorpakets, das Teil eines Segments ist und einen Rotorzahn und einen Abschnitt des Rotorjochs einstückig umfasst, , d. h. aus einem einzigen Körper ausgebildet ist, der somit nicht aus mehreren, miteinander verbundenen respektive zusammengefügten Einzelbauteilen aufgebaut ist. In bevorzugter Weise besteht ein jeweiliges Teilstück des Rotorpakets jedoch aus miteinander, insbesondere kraft-, form- und/stoffschlüssig verbundenen Einzelbauteilen. Diese Einzelbauteile sind dabei, insbesondere durch Paketieren, z. B. Stanzpaketieren und/oder Klebepaketieren, zu den Segmenten, insbesondere den Teilstücken, axial aneinandergereihte Lamellen und/oder Teillamellen, insbesondere Blechlamellen.

Die Segmente des Rotors, hierbei insbesondere die Teilstücke des Rotorpakets, können dabei stets eine gleiche Form, insbesondere eine gleiche Querschnittsform aufweisen. Hierbei können die Segmente jeweils eine Verbindungsstruktur aufweisen, welche je Segment entsprechend gleichartig ausgeformt ist und die die Verbindung etablierend wenigstens bereichsweise formschlüssig ineinandergreifen.

In einer überaus vorteilhaften Weiterbildung der Erfindung gehören die Segmente, insbesondere die Teilstücke des Rotorpakets, jedoch mindestens zwei, vorzugsweise genau zwei verschiedenen Arten von Segmenten und/oder Teilstücken zu, welche respektive wobei die Segmente je nach Art, d. h. entsprechend von Art zu Art, eine sich zumindest teilweise unterscheidende Form, insbesondere eine sich zumindest teilweise unterscheidende Querschnittsform aufweisen. Vorzugsweise sind dabei Segmente, insbesondere Teilstücke verschiedener Art jeweils abwechselnd aneinander angeordnet und/oder bilden abwechselnd zumindest die Rotorzähne des Rotorpakets aus. Die Ausgestaltung der Segmente, insbesondere der Teilstücke mit einer unterschiedlichen Form und/oder Formgebung, ermöglicht es beispielsweise, den Rotor und/oder das Rotorpaket besser auf die mechanischen Belastungen im Betrieb eines den Rotor aufweisenden Elektromotors anzupassen. Insbesondere wird es dadurch ermöglicht, die Verbindung und/oder die Verbindung ausgestaltenden Verbindungsstrukturen der Segmente und/oder Teilstücke derart anzupassen, dass die Belastungen gleichmäßig auf die Verbindung und/oder Verbindungsstrukturen wirken und somit keine lokalen Überhöhungen, z. B. Spannungsspitzen entstehen, die zu Beschädigungen und/oder einem Versagen der Verbindung und/oder Verbindungsstrukturen und somit des Rotors führen können.

Bei der Ausführung der Segmente aus Lamellen und/oder Teillamellen ist es dabei bevorzugt, dass die Segmente verschiedener Art eine unterschiedliche Lamellendicke aufweisen. Hierdurch lässt es sich vorteilhaft vermeiden, dass die Lamellen und/oder Teillamellen bei einer Anordnung der Segmente verschiedener Art, beispielsweise bei deren Montage, aneinander, insbesondere radial und/oder in Umfangsrichtung ineinandergleiten.

Darüber hinaus stellt sich eine Ausführungsform der Erfindung als vorteilhaft dar, wenn die sich zumindest teilweise unterscheidende Form der Segmente, insbesondere der Teilstücke verschiedener Arten, wenigstens zum Teil durch eine je Art unterschiedlich ausgeformte Verbindungsstruktur eines jeden Segments und/oder Teilstücks ausgestaltet ist, wobei die Verbindungsstrukturen der Segmente und/oder Teilstücke der jeweiligen Arten komplementär zueinander ausgeformt sind und wenigstens bereichsweise formschlüssig ineinandergreifen, wodurch die Verbindung zwischen den Segmenten zumindest teilweise etabliert ist. Das Ausführen einer Verbindungsstruktur je Segment und/oder Teilstück, welche je nach Art des Segments und/oder Teilstücks verschieden, jedoch komplementär zur Verbindungsstruktur der jeweils anderen Art ausgeformt ist, stellt hierbei eine vorteilhafte Möglichkeit dar, die Verbindung zwischen den Segmenten zu etablieren und/oder auszubilden. Es wird hierdurch eine optimale Passgenauigkeit und eine sicherere formschlüssige Verbindung gewährleistet. Zudem bieten die komplementären Verbindungsstrukturen den Vorteil einer Selbstzentrierung der Segmente während der Montage des Rotors. Die Verbindungsstruktur der Segmente einer respektive innerhalb einer Art sind hierbei folgerichtig jeweils gleich ausgeformt.

Von Vorteil ist es weiterhin, wenn in einer Ausbildung der Erfindung eine jeweilige Verbindungstruktur wenigstens ein konkav und/oder konvex ausgeformtes Verbindungselement und/oder Teilverbindungselement aufweist, wobei die Verbindungsstrukturen der Segmente und/oder Teilstücke des Rotorpakets der jeweiligen Arten zumindest anteilig über das zumindest eine Verbindungselement und/oder Teilverbindungselement komplementär zueinander ausgeformt sind und formschlüssig ineinandergreifen. Die Ausführung der Verbindungstrukturen über konkav und/oder konvex ausgeformte Verbindungselemente ermöglicht hierbei vorteilhaft die Bereitstellung von sich hinterschneidenden Verbindungsstrukturen, wobei sich entsprechend auch die Verbindungselemente selbst bevorzugt zumindest abschnittsweise gegenseitig hinterschneiden. Darüber hinaus ermöglicht die Ausführung über konkave und/oder konvexe Verbindungselemente Anteile der durch die Welle-Nabe-Verbindung radial auf das Rotorpaket und/oder die Segmente wirkenden Kraft in ihrer Richtung zu ändern und auch in Umfangsrichtung auf das Rotorpaket und/oder die Segmente wirken zu lassen. Die Kraft kann derart über einen in Umfangrichtung wirkenden Anteil eine Spreizung von Segmenten und/oder Teilstücken, insbesondere Segmenten und/oder Teilstücken erster Art entsprechend in Umfangsrichtung bewirken, sodass diese Segmente und/oder Teilstücke nicht nur radial, sondern auch in Umfangsrichtung gegen Segmente und/oder Teilstücke einer weiteren, insbesondere der zweiten Art, gepresst und somit verklemmt werden. So kann auch auf zusätzliche Klemm- und/oder Fixierelemente verzichtet werden, da die Verbindungselemente selbst als solche Klemm- und/oder Fixierelemente fungieren. Gerade bei abgerundeten konkaven und/oder konvexen Verbindungselementen kann die durch die Welle-Nabe-Verbindung wirkende Kraft sowie auf den Rotor wirkende Belastungen im Wesentlichen ohne ein Entstehen von Spannungsspitzen über das Rotorpaket und/oder die Segmente verteilt werden, sodass die Wahrscheinlichkeit von Defekten minimiert wird.

Ferner lässt sich eine Ausgestaltung der Erfindung als vorteilhaft ansehen, wenn zwei jeweils aneinander anliegende Segmente und/oder Teilstücke des Rotorpakets einer, bevorzugt der ersten Art, ein somit insbesondere zwei Verbindungsstrukturen zugehöriges, übergreifendes Verbindungselement ausformen. Dieses übergreifende Verbindungselement wirkt dabei mit einem komplementären Verbindungselement, insbesondere eines Segments und/oder Teilstücks der weiteren, vorzugsweise zweiten Art zusammen und wird beispielsweise von diesem abschnittsweise eingefasst oder liegt zumindest an diesem an. So kann eine äußerst stabile Verbindung der Verbindungselemente und/oder der Segmente und/oder Teilstücke untereinander gewährleistet werden.

Mit Vorteil ist eine Weiterbildung der Erfindung überdies auch dann behaftet, wenn Segmente und/oder Teilstücke des Rotorpakets zumindest zweier, bevorzugt genau zweier Arten, besonders bevorzugt der ersten Art und der zweiten Art, das Rotorjoch des Rotorpakets zumindest teilweise ausformend an der Rotorwelle und, insbesondere ausschließlich seitenflächig, d. h. mit ihren in Umfangsrichtung liegenden Seitenflächen, aneinander anliegen, wobei deren Verbindungsstrukturen bereichsweise formschlüssig ineinandergreifen. Hierdurch werden sowohl die durch die Welle-Nabe-Verbindung wirkende Kraft als auch auf den Rotor wirkende Belastungen im Wesentlichen gleichmäßig auf die Segmente und/oder Teilstücke, insbesondere auf die Verbindungsstrukturen der Segmente und/oder Teilstücke, verteilt. Ein formschlüssiger, insbesondere ein radial nach außen formschlüssiger und/oder ein in Umfangsrichtung formschlüssiger Anteil der Verbindung wäre hierbei durch die Verbindungsstrukturen der Segmente verschiedener Arten, insbesondere in die Richtungen der formschlüssigen Anteile der Verbindung gleichermaßen etabliert.

In einer anderweitigen, jedoch nicht minder vorteilhaften Ausgestaltung der Erfindung ist hingegen angedacht, dass ausschließlich Segmente und/oder Teilstücke des Rotorpakets einer, insbesondere der ersten Art das Rotorjoch des Rotorpakets zumindest teilweise, bevorzugt im Wesentlichen ausformend an der Rotorwelle sowie in einem Stoßbereich dieser Segmente und/oder Teilstücke aneinander anliegen, zudem Segmente und/oder Teilstücke der weiteren, insbesondere zweiten Art an diesen Segmenten und/oder Teilstücken, insbesondere der ersten Art anliegen, wobei die Verbindungsstrukturen der Segmente und/oder Teilstücke bereichsweise formschlüssig ineinandergreifen und ein die Verbindungsstruktur zumindest teilweise umfassender Fuß eines jeweiligen Segments und/oder Teilstücks der weiteren, insbesondere zweiten Art durch angrenzende Segmente und/oder Teilstücke erster Art seiten- und fußflächig eingefasst ist. Hierdurch wird zwar auf die Verbindungsstrukturen der Segmente und/oder Teilstücke der weiteren, insbesondere zweiten Art grundsätzlich ein höherer Anteil der durch die Welle-Nabe-Verbindung wirkenden Kraft als auch auf den Rotor wirkende Belastungen ausgeübt, jedoch lässt sich aufgrund der geringeren aneinander entlangzuführenden Oberflächen der Verbindungsstrukturen der Segmente verschiedener Art die Montage dieser aneinander vereinfachen. Ein formschlüssiger, insbesondere ein radial nach außen formschlüssiger und/oder ein in Umfangsrichtung formschlüssiger Anteil der Verbindung wäre hierbei durch die Verbindungsstrukturen der Segmente verschiedener Arten, insbesondere in die Richtungen der formschlüssigen Anteile der Verbindung, ungleich etabliert.

Grundsätzlich besteht die Möglichkeit, dass die Übertragung von Energie auf die Erregerwicklungen des Rotors in einem den Rotor aufweisenden Elektromotor kontakt- und/oder drahtlos, hierbei insbesondere induktiv ausgeführt ist. Eine erste Möglichkeit besteht dabei darin, dass elektrische Energie durch die Statorwicklungen des Stators, welche als Primärspule wirken, induktiv auf eine separat zu den Erregerwicklungen ausgeführte Empfängerspule des Rotors, welche als Sekundärspule wirkt, übertragen wird. Die Empfängerspule kann dann, insbesondere über einen mit der Empfängerspule elektrisch verbundenen Gleichrichter, die Erregerwicklungen speisen. Eine weitere Möglichkeit ist zudem dadurch gegeben, dass die Rotorwelle des Rotors als eine Hohlwelle ausgebildet ist, wobei in der Rotorwelle ein induktiver Übertrager angeordnet ist. Der induktive Übertrager umfasst dabei eine drehfest mit der Hohlwelle verbundene Sekundärwicklung und eine in der Rotorwelle und drehstarr gegenüber dieser positionierte Primärwicklung. Die Primärwicklung kann dabei durch eine elektrische Energiequelle mit einem elektrischen Strom speisbar sein. Die Sekundärwicklung wäre zudem mit den Erregerwicklungen elektrisch leitend verbunden und somit über diese mit einem induzierten Erregerstrom speisbar.

Weiterhin zeigt sich eine Ausführungsform der Erfindung als vorteilhaft, bei der zumindest eine Teilmenge der Erregerwicklungen mit einem, insbesondere zumindest an einem axialen Ende des Rotors auf die Rotorwelle aufgebrachten, vorzugsweise aufgeschobenen Kontaktring elektrisch verschaltet und/oder verbunden ist und der Kontaktring elektrisch mit wenigstens einem Schleifringübertrager kontaktiert ist. Der Kontaktring ermöglicht hierbei eine zuverlässige elektrische Kontaktierung der Erregerwicklungen und der Schleifringübertrager eine zuverlässige und kontinuierliche elektrische Kontaktierung zur Leitung von Strom auf den sich im Betrieb eines den Rotor aufweisenden Elektromotors rotierenden Rotor. Durch die Verbindung mit dem Schleifringübertrager wird der elektrische Kontakt trotz der Rotationsbewegung aufrechterhalten, was eine stabile Versorgung der Erregerwicklungen sicherstellt. Das Aufbringen des Kontaktrings auf die Rotorwelle, insbesondere an einem axialen Ende des Rotors, sorgt für eine platzsparende Integration in die Gesamtstruktur des Rotors. Dies trägt zur Kompaktheit und zu einer schlanken Bauweise des Rotors und/oder eines den Rotor aufweisenden Elektromotors bei, was insbesondere in beengten Einbauräumen von Vorteil ist.

Eine weitere in vorteilhafter Weise ausgeführte Weiterbildung der Erfindung liegt auch darin begründet, dass an zumindest einem axialen und/oder stirnseitigen Ende, bevorzugt an beiden axialen und/oder stirnseitigen Enden eines Segments, vorzugsweise eines jeweiligen Segments respektive aller Segmente, eine Endkappe angeordnet ist. Im Speziellen ist die Endkappe oder sind die Endkappen hierbei an dem vom Segment beinhalteten Teilstück des Rotorpakets angeordnet, wobei eine Endkappe bündig mit den beiden Seitenflächen der Rotorzähne, insbesondere der Zahnschäfte abschließt, an denen die Erregerwicklung anliegt und einen abgerundeten Übergang zwischen den Seitenflächen ausbildet. Hierfür weist eine jeweilige Endkappe in ihrem Wickelaufnahmebereich einen ovalen oder runden, insbesondere einen kreisförmigen respektive halbkreisförmigen Querschnitt oder Längsschnitt auf. Dadurch wird ein Kontakt der Erregerwicklungen mit den Kanten zwischen den Seitenflächen und den Stirnflächen des Segments und/oder des Teilstücks und dadurch eine Beschädigung der Erregerwicklung bei der Herstellung des Segments vermieden.

Als vorteilhaft ist eine Ausbildung der Erfindung zudem anzusehen, wenn zwischen den Erregerwicklungen, insbesondere jeweils benachbarter Rotorzähne zumindest ein Stützkörper, auch Verdrängerkörper zum Stützen und/oder Verdrängen der Erregerwicklungen, folglich in der Nut zwischen den benachbarten Rotorzähnen angeordnet ist. Der oder ein jeweiliger der Stützkörper sorgt hierbei vorteilhaft dafür, dass die Erregerwicklungen, insbesondere bei einer mechanischen Belastung, wie sie beispielweise im Betrieb eines den Rotor aufweisenden Elektromotors auftritt, in ihrer Position gehalten werden. Dies führt zu einer höheren mechanischen Stabilität der Erregerwicklungen, was besonders unter starken mechanischen Belastungen, wie hohen Rotationsgeschwindigkeiten, wichtig ist. Hierbei können Stützkörper verwendet werden, welche insbesondere in Relation zu Stützkörpern, die bei Erregerwicklungen eingesetzt werden, welche z. B. mittels Nadelwickleltechnik auf die Rotorzähne aufgebracht wurden, ein geringeres Volumen aufweisen. Da die korrekte Positionierung und Stützung einer Erregerwicklung über einen Stützkörper verhindert, dass diese unerwünschte Bewegungen ausführt, die zu elektromagnetischen Verlusten führen könnten, wird zudem die Effizienz eines den Rotor aufweisenden Elektromotors, insbesondere einer fremderregten Synchronmaschine, verbessert.

Von Vorteil ist eine Gestaltungsform der Erfindung weiterhin, wenn radial außen zwischen den Rotorzähnen, vorzugsweise den Zahnköpfen der Rotorzähne, insbesondere jeweils ein Halteelement angeordnet ist, welches eine zwischen den Rotorzähnen ausgeformte Nut zumindest radial begrenzt und/oder abdeckt. Primär lässt es sich hierdurch in vorteilhafter Weise vermeiden, dass die Erregerwicklungen und/oder Teile der Erregerwicklungen, wie die die Erregerwicklungen ausbildenden elektrischen Leiter, z. B. bei hohen Belastungen des Rotors, aus den Nuten zwischen den Rotorzähnen austreten und so in den Luftspalt zwischen Stator und Rotor eines den Rotor aufweisenden Elektromotors gelangen können. Die Halteelemente können zudem als Stütze zwischen den Rotorzähnen dienen und so die mechanische Stabilität des Rotors erhöhen. Insbesondere können Vibrationen der Rotorzähne minimiert werden. Die Halteelemente können darüber hinaus durch die Abdeckung der Nut auch zur Dämpfung von Schwingungen und damit zur Reduzierung von Schallemissionen im Betrieb eines den Rotor aufweisenden Elektromotors beitragen. Diese Schwingungsdämpfung sorgt somit für einen leiseren und effizienteren Betrieb des Elektromotors.

Anstelle oder in Kombination mit den Stützkörpern und/oder Halteelementen kann der Rotor auch vergossen sein.

Ferner ist eine Weiterbildung der Erfindung vorteilhaft, bei der die Erregerwicklungen aus Aluminium oder einer Aluminiumlegierung bestehen. Im Vergleich zu Erregerwicklungen aus Kupfer lässt sich durch die Ausführung der Erregerwicklungen aus Aluminium die Masse und/oder das Gewicht der Erregerwicklungen und somit des Rotors minimieren. Dies führt zu einem geringeren Trägheitsmoment des Rotors, was wiederum zu einer gesteigerten Effizienz, Leistung und/oder Dynamik eines den Rotor aufweisenden Elektromotors und dadurch bedingt auch zu einer besseren Beschleunigung und Gesamtleistung eines einen solchen Elektromotor als Antrieb aufweisenden Kraftfahrzeugs führt.

Erfindungsgemäß ist zudem ein Verfahren zur Fertigung des zuvor erläuterten Rotors vorgesehen, wobei die Segmente verschiedener Art zunächst über eine Verfahrensfolge des Vormontierens des Rotors bereitgestellt werden. In einer darauffolgenden Verfahrensfolge des Endmontierens des Rotors wird aus Segmenten einer der Arten, insbesondere der ersten Art, vorerst eine, insbesondere sternförmige Teilbaugruppe dieser Segmente angeordnet und anschließend durch ein formschlüssiges Verbinden von Segmenten einer weiteren der Arten, insbesondere der zweiten Art, mit den Segmenten der Teilbaugruppe eine, insbesondere sternförmige Vollbaugruppe der Segmente erzeugt. In bevorzugter Weise werden die Segmente, insbesondere der ersten Art, die die Teilbaugruppe ausbilden sollen, zunächst zusammengeführt und in Form der Teilbaugruppe über eine Haltevorrichtung gehaltert. Die Segmente der weiteren, insbesondere zweiten Art werden darauffolgend auf die Teilbaugruppe, insbesondere axial aufgebracht, hierbei insbesondere axial aufgeschoben. Das Aufbringen, hierbei insbesondere Aufschieben, erfolgt dabei derart, dass die jeweilige Verbindungstruktur der Segmente der weiteren, insbesondere zweiten Art in die komplementär ausgeformten - und somit im Wesentlichen ein Negativ der Verbindungsstruktur dieser Segmente ausformendenden - Verbindungsstrukturen der Segmente der Teilbaugruppe eingebracht, hierbei insbesondere axial eingeschoben werden. Infolge des Aufbringens, insbesondere Aufschiebens der Segmente der weiteren, insbesondere zweiten Art greifen die Verbindungsstrukturen formschlüssig ineinander, wobei in der Vollbaugruppe zwischen den Segmenten zumindest teilweise eine Verbindung, hierbei insbesondere ein formschlüssiger Anteil der Verbindung, etabliert ist. So ist, insbesondere radial und/oder in Umfangsrichtung, auch ein struktureller Zusammenhalt der Vollbaugruppe ausgebildet, welcher bei der Teilbaugruppe noch nicht gegeben ist. Lediglich durch axiales Verschieben der Segmente der Vollbaugruppe ließen sich diese wieder voneinander trennen.

Um auch in axialer Richtung eine Verbindung zwischen den Segmenten der Vollbaugruppe und somit auch den strukturellen Zusammenhalt des Rotors zu etablieren, wird in einer überaus vorteilhaften Weiterbildung der Erfindung die Welle-Nabe-Verbindung zwischen Rotorwelle und Rotorpaket in der Verfahrensfolge des Endmontierens ausgebildet, indem die Rotorwelle kraft- und/oder formschlüssig mit der, insbesondere sternförmigen Vollbaugruppe der Segmente gefügt wird. Durch das Fügen der Rotorwelle und dem damit erfolgenden Ausbilden der Welle-Nabe-Verbindung zwischen Rotorwelle und Rotorpaket, welches von der Vollbaugruppe der Segmente umfasst wird, wird dabei vorteilhaft eine, insbesondere radial auf das Rotorpaket wirkende Kraft ausgebildet, durch die die Segmente, insbesondere über deren Verbindungsstrukturen vorteilhaft gegeneinander verklemmt werden. Durch das Verklemmen ist damit zwischen den Segmenten auch in axiale Richtung die Verbindung, insbesondere ein kraftschlüssiger Anteil der Verbindung etabliert. So kann ein im Grunde selbsttragender, segmentierter Rotor bereitgestellt werden, welcher ohne weitere Verbindungselemente zur Verbindung der Segmente des Rotors auskommt, was im Wesentlichen optimale mechanische sowie magnetische Eigenschaften des Rotors und/oder eines den Rotor aufweisenden Elektromotors gewährleistet.

Von Vorteil ist eine Ausgestaltung der Erfindung zudem dann, wenn das Bereitstellen der Segmente über die Verfahrensfolge des Vormontierens, je Segment ein Wickeln, insbesondere ein Linearwickeln der Erregerwicklung auf ein separates, einen Rotorzahn und einen Abschnitt des Rotorjochs umfassendes Teilstück des Rotorpakets beinhaltet. Das Wickeln, hier insbesondere Linearwickeln, der Erregerwicklung auf einzelne Teilstücke des Rotorpakets erlaubt eine deutlich effizientere und schnellere Fertigung im Vergleich zu herkömmlichen Wickeltechniken wie der Nadelwicklung auf einteilige Rotorpakete. Das Wickeln auf kleinere, separate Teilstücke ermöglicht dabei zudem eine einfachere Automatisierung des Wickelns, was die Produktionszeit verkürzt und den Fertigungsaufwand verringert. Da die Erregerwicklung auf einzelne Teilstücke gewickelt wird, kann darüber hinaus eine höhere Wicklungsdichte und/oder ein höherer Wicklungs- und/oder Leiterfüllfaktor, insbesondere Kupfer- oder Aluminiumfüllfaktor, erzielt werden, was wiederum die elektrische Leistungsfähigkeit des Rotors respektive eines den Rotor aufweisenden Elektromotors verbessert. Die Trennung des Rotorpakets in einzelne Teilstücke und das Ausbilden der Segmente aus den Teilstücken bietet zudem den Vorteil, dass jedes Segment auch separat geprüft werden kann, bevor es in den Rotor integriert wird. So kann der Ausschuss in der Fertigung des Rotors reduziert werden. Weiterhin wird auch die Nachhaltigkeit und Wartungsmöglichkeit des Rotors und/oder eines den Rotor aufweisenden Elektromotors gesteigert, da es ermöglicht wird, einzelne fehlerhafte Segmente auszutauschen.

Als vorteilhaft stellt sich eine Ausbildung der Erfindung ferner dann dar, wenn das Bereitstellen der Segmente über die Verfahrensfolge des Vormontierens je Segment ein Imprägnieren der auf das separate Teilstück gewickelten Erregerwicklung, insbesondere in einem Imprägnierbad beinhaltet. Das Imprägnieren der Erregerwicklungen, insbesondere in einem Imprägnierbad, sorgt für eine durchgehende und lückenlose Beschichtung der Erregerwicklungen mit einem Isoliermedium, wie einem isolierenden Harz oder Lack. Dies erhöht die elektrische Isolationsfähigkeit der Erregerwicklungen, was die Spannungsfestigkeit verbessert und Kurzschlüsse oder elektrische Durchschläge verhindert. Dadurch wird die Zuverlässigkeit und Betriebssicherheit des Rotors deutlich erhöht. Weiterhin werden die Erregerwicklungen durch das Imprägnieren zusätzlich mechanisch verstärkt. Die imprägnierte Schicht stabilisiert die Erregerwicklungen und verhindert, dass sie sich z. B. während des Betriebs oder unter mechanischer Belastung zumindest teilweise entflechtet. Dies führt zu einer erhöhten Robustheit der Erregerwicklungen und verlängert die Lebensdauer des Rotors. Das Imprägnieren der Wicklungen bietet auch einen wirksamen Schutz gegen Feuchtigkeit, Kühlschmierstoffe, Staub, Schmutz und andere Umwelteinflüsse. Durch die Versiegelung der Wicklungen wird die Gefahr von Korrosion oder Feuchtigkeitsschäden minimiert, was die Funktionsfähigkeit des Rotors sicherstellt, gerade dann, wenn als Material der Erregerwicklungen Aluminium oder eine Aluminiumlegierung verwendet wird.

Die Erfindung lässt zahlreiche Ausführungsformen zu. Zur weiteren Verdeutlichung ihres Grundprinzips sind einige davon in der Zeichnung dargestellt und werden nachfolgend beschrieben. Die Zeichnung zeigt in
- Fig. 1: eine erste Ausführungsform des Rotors;
- Fig. 2 bis 5: Ausführungsformen des Rotors mit sich unterscheidender Ausgestaltung der Segmente und Verbindungsstrukturen;
- Fig. 8 bis 13: einen Teil des Verfahrens zur Fertigung eines Rotors;
- Fig. 14, 15: eine Ausführungsform des Rotors mit unterschiedlicher Lamellendicke der Lamellen der Segmente;
- Fig. 16 bis 19: eine Ausführungsform des Verfahrens;
- Fig. 20: eine Detaildarstellung des Verfahrensschritts des Wickelns einer Erregerwicklung;
- Fig. 21: eine Detaildarstellung des Verfahrensschritts des Imprägnierens einer Erregerwicklung.

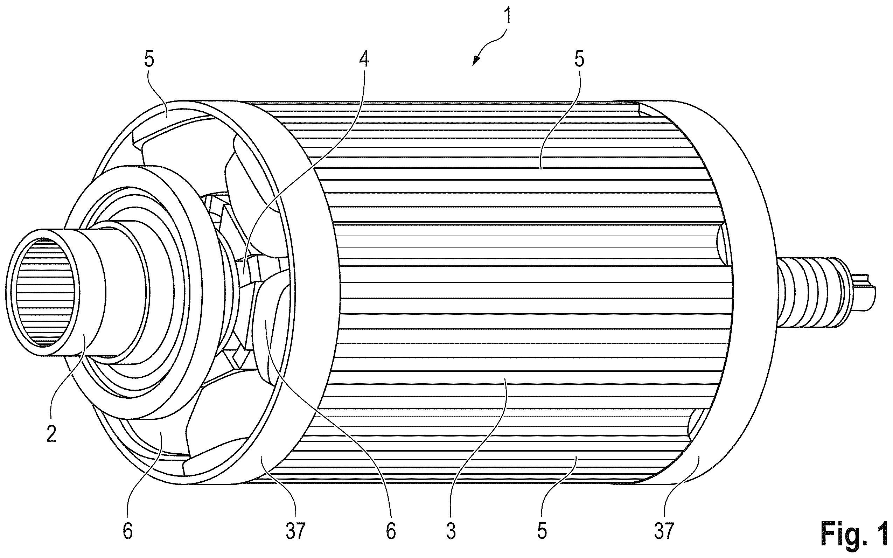

Die Figur 1 zeigt eine Ausführungsform eines erfindungsgemäßen Rotors 1 für einen nicht näher dargestellten Elektromotor, insbesondere eine fremderregte Synchronmaschine nach dessen Fertigung mittels einer Ausgestaltung des erfindungsgemäßen Verfahrens. Der Rotor 1 umfasst hierbei das auf der Rotorwelle 2 des Rotors 1 angeordnete Rotorpaket 3, wobei das das Rotorpaket 3 seinerseits das Rotorjoch 4 sowie eine Mehrzahl Rotorzähne 5 aufweist, welche jeweils eine Erregerwicklung 6 tragen. Zur Verstärkung des Rotors 1 sind zudem die Armierungsringe 37 mit dem Rotorpaket 3 gefügt.

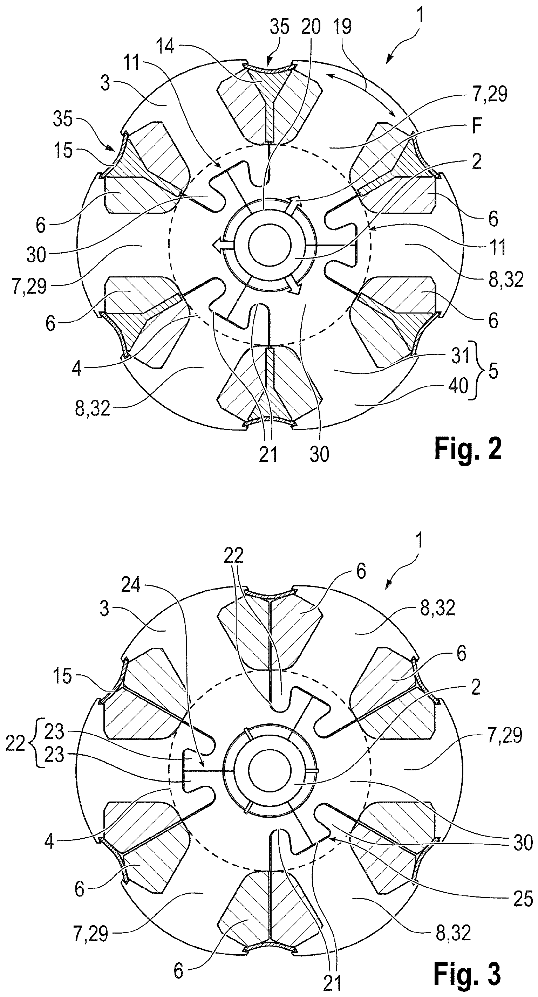

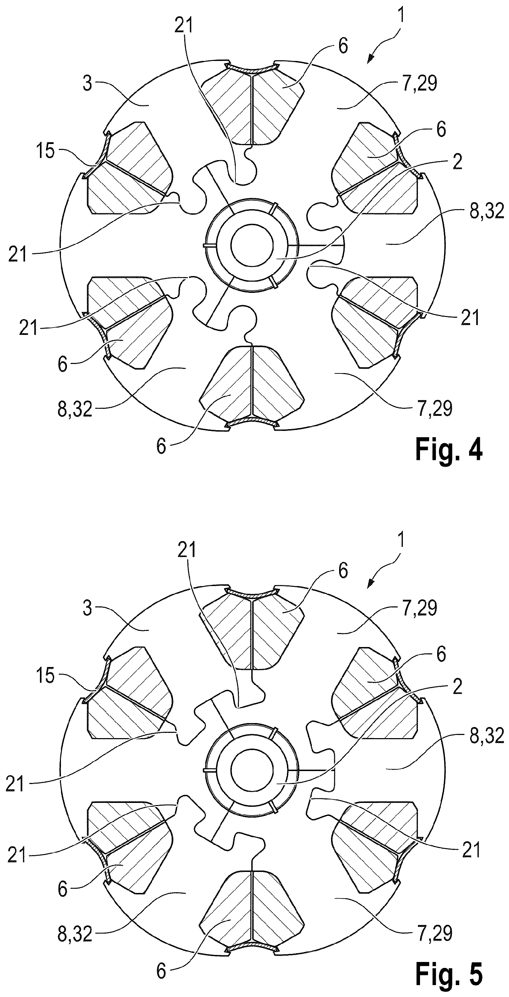

Die Figuren 2 bis 7 veranschaulichen zudem Querschnitte verschiedener Ausführungsformen des Rotors 1, wobei aus den Figuren 2 bis 7 zu entnehmen ist, dass der Rotor 1 mehrere, hierbei im Speziellen jeweils sechs den Rotor 1 und/oder das Rotorpaket 3 in Umfangsrichtung 19 des Rotors 1 zergliedernde Segmente 7, 8 aufweist. Die Ausführungsformen unterscheiden sich dabei in der Ausgestaltung der Segmente 7, 8, wobei diese hierbei jeweils zwei, d. h. in diesem Fall genau zwei verschiedenen Arten von Segmenten 7, 8 zugehören. Die Segmente 7, 8 weisen dabei eine sich von Art zu Art unterscheidende oder auch teilweise unterscheidende Form auf. Ein jeweiliges Segment 7, 8 umfasst zudem den Rotorzahn 5 mitsamt dessen Erregerwicklung 6 sowie den mit einem jeweiligen Rotorzahn 5 des Segments 7, 8 einstückig ausgeführten Abschnitt 30 des Rotorjochs 4. Ein Rotorzahn 5 und der zugehörige Abschnitt 30 bilden dabei ein Teilstück 29, 32 des Rotorpakets 3, welches neben der auf dem Zahnschaft 31 des Rotorzahns 5 angeordneten und/oder am Zahnkopf 40 des Rotorzahns 5 anliegenden Erregerwicklung 6 vom jeweiligen Segment 7, 8 umfasst wird. Das Rotorjoch 4 ist zudem in den Figuren 2 und 3 schematisch durch eine Strichelung angedeutet, sodass verbessert erkennbar ist, dass die Rotorzähne 5 der Segmente 7, 8 der beiden Arten im Wesentlichen gleich ausgeformt sind, der Abschnitt 30 der Segmente 7, 8 der beiden Arten sich jedoch in seiner Form unterscheidet.

Ferner sind die Segmente 7, 8 und/oder die von den Segmenten 7, 8 umfassten Teilstücke 29, 32 des Rotorpakets 3 verschiedener Art zum Ausformen ebendieses Rotorpakets 3 und/oder des Rotors 1 miteinander über die kraft- und/oder formschlüssige Verbindung 11 gefügt.

Die Verbindung 11 ist dabei, wie insbesondere den Figuren 2 und 3 zu entnehmen ist, zumindest teilweise über die Verbindungsstrukturen 21 der Segmente 7, 8 etabliert, welche dabei in den Abschnitten 30 des Rotorjochs 4 ausgeformt sind. Die sich zumindest teilweise unterscheidende Form der Segmente 7, 8 der beiden Arten ist dabei im Wesentlichen durch die je Art der Segmente 7, 8 unterschiedlich ausgeformte Verbindungsstruktur 21 bedingt. Die Verbindungsstrukturen 21 der Segmente 7, 8 der beiden Arten sind dabei zum Etablieren der Verbindung 11 komplementär zueinander ausgeformt und greifen wenigstens bereichsweise formschlüssig ineinander. Eine jeweilige Verbindungsstruktur 21 weist dabei mehrere konkav und/oder konvex ausgeformte Verbindungselemente 22 und/oder Teilverbindungselemente 23 auf, wobei die Verbindungsstrukturen 21 der Segmente 7, 8 der beiden Arten entsprechend über die Verbindungselemente 22 und/oder Teilverbindungselemente 23 komplementär zueinander ausgeformt sind.

Die Teilverbindungselemente 23 sind hierbei in den Segmenten 7 erster Art der Ausführungsformen des Rotors 1 der Figuren 2 bis 6 ausgeführt, wobei zwei, sich jeweils in Kontakt befindende Teilverbindungselemente 23, zweier in dem jeweiligen Stoßbereich 24 aneinander anliegender Segmente 7 der ersten Art, ein übergreifendes Verbindungselement 22 ausformen.

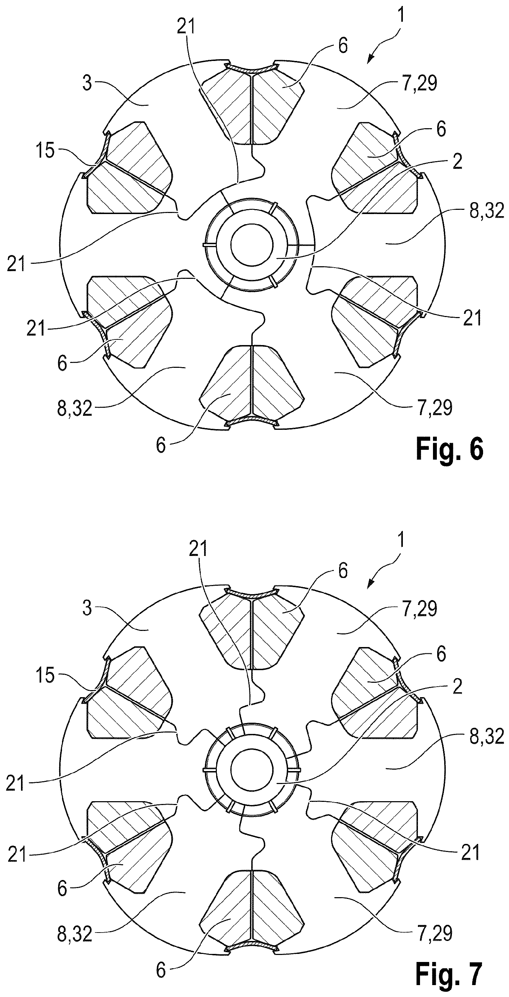

Das jeweilige aus zwei Teilverbindungselementen 23 bestehende, übergreifende Verbindungselement 22 wirkt dabei mit dem komplementären Verbindungselement 22, des Segments 8 und/oder Teilstücks 32 der zweiten Art, welches in Umfangsrichtung 19 zwischen den Segmenten 7 angeordnet ist, die die Teilverbindungselemente 23 aufweisen, zusammen und wird von diesem abschnittsweise eingefasst oder liegt, wie insbesondere bei der Ausführungsform der Figur 6, zumindest an diesem an. Das Verbindungselement 22 des Segments 8 der zweiten Art bildet dadurch im Grunde eine Klammer um oder Brücke über das aus den beiden Teilverbindungselementen 23 bestehende Verbindungselement 22 der beiden Segmente 7 erster Art.

Die Ausformung der Teilverbindungselemente 23 in den Ausführungsformen des Rotors 1 der Figuren 2 bis 6 geht dabei damit einher, dass in diesen Ausführungsformen ausschließlich Segmente 7 der ersten Art an der Rotorwelle 2 sowie in dem Stoßbereich 24 dieser Segmente 7 aneinander und zudem die Segmente 8 der zweiten Art an den Segmenten 7 der ersten Art anliegen, wobei der die Verbindungsstruktur 21 umfassende Fuß 25 eines jeweiligen Segments 8 der zweiten Art durch die jeweils angrenzenden Segmente 7 der ersten Art seiten- und fußflächig eingefasst ist.

In der Ausführungsform des Rotors 1 der Figur 7 liegen hingegen die Segmente 7, 8 der beiden Arten an der Rotorwelle 2 sowie seitenflächig aneinander an, wobei die Verbindungsstrukturen 21 entsprechend abwechselnd formschlüssig ineinandergreifen.

Die vorstehend beschriebene Etablierung der Verbindung 11 zwischen den Segmenten 7, 8 über die formschlüssig ineinandergreifenden Verbindungsstrukturen 21 stellt hierbei radial sowie in Umfangsrichtung 19 einen formschlüssigen Anteil der Verbindung 11 bereit. Darüber hinaus ist die Verbindung 11 zudem zumindest teilweise dadurch etabliert, dass die Segmente 7, 8 durch die hierbei radial auf das Rotorpaket 3 und somit die Segmente 7, 8 wirkende Kraft F gegeneinander verklemmt sind, wobei die, insbesondere in der Figur 2 dargestellte Kraft F aufgrund der zwischen Rotorpaket 3 und Rotorwelle 2 vorliegenden Welle-Nabe-Verbindung 20, insbesondere einer Press- und/oder Klemmverbindung, ausgebildet ist. Hierdurch liegt in axialer Richtung des Rotors 1 zwischen den Segmenten 7, 8 zudem ein kraftschlüssiger Anteil der Verbindung 11 vor, sodass der strukturelle Zusammenhalt des Rotors 1 vollständig gegeben und eine Relativbewegung der Komponenten des Rotors 1, insbesondere der Segmente 7, 8 und der Rotorwelle 2 nicht möglich ist.

Darüber hinaus ist bei allen Ausführungsformen des Rotors 1 der Figuren 2 bis 7 zwischen den Rotorzähnen 5, hierbei zwischen den Zahnköpfen 40 der Rotorzähne 5, jeweils ein Halteelement 15 angeordnet, welches die zwischen den Rotorzähnen 5 ausgeformte Nut 35 radial begrenzt und/oder abdeckt. In der Ausführungsform des Rotors 1 der Figur 2 ist zwischen den Erregerwicklungen 6 jeweils benachbarter Rotorzähne 5 zudem der Stützkörper 14 zum Stützen der Erregerwicklungen 6 in der Nut 35 zwischen den benachbarten Rotorzähnen 5 angeordnet.

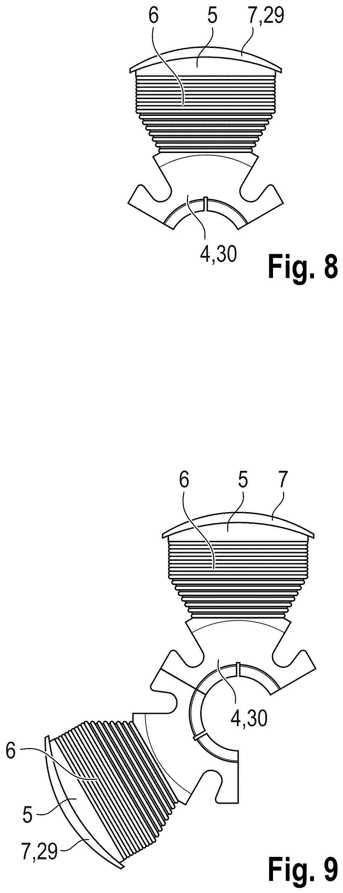

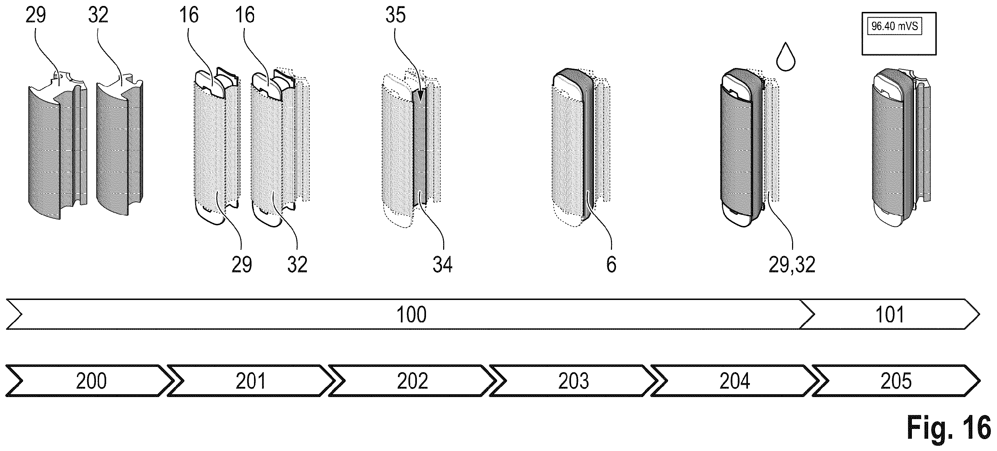

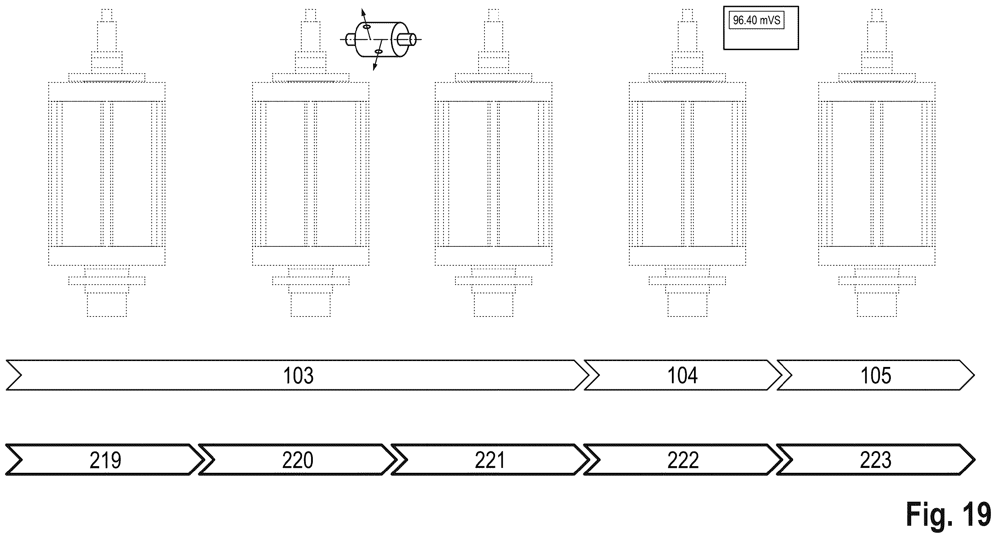

Die Figuren 8 bis 11 beschreiben nunmehr einen Teil des Verfahrens zur Fertigung eines aus den Figuren 1 bis 7 bekannten Rotors 1, wobei das Verfahren in den Figuren 16 bis 19 nochmals in dessen Vielzahl an Verfahrensfolgen und -schritten dargestellt ist.

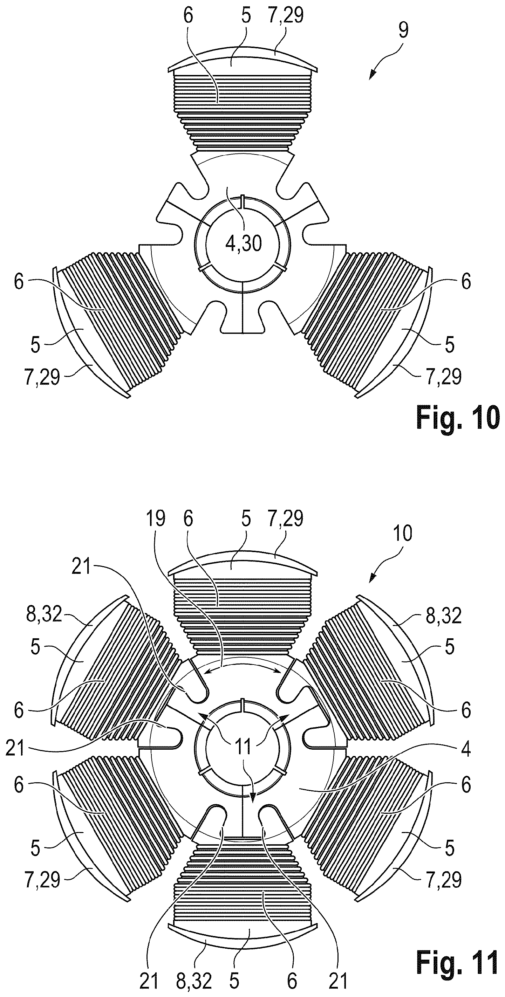

Aus den Figuren 8 bis 10 geht hierbei zunächst hervor, dass die Segmente 7 der ersten Art, die über die in der Figur 16 angeführte Verfahrensfolge des Vormontierens 100 bereitgestellt werden, in der auch die Erregerwicklungen 6 auf den Rotorzahn 5 gewickelt 203 werden, in der mittelbar darauffolgenden Verfahrensfolge des Endmontierens 102 des Rotors 1 zunächst zu der, insbesondere in der Figur 10 aufgezeigten Teilbaugruppe 9 dieser Segmente 7 angeordnet 206 werden.

Die Figur 8 zeigt dabei ein Segment 7 umfassend das Teilstück 29 des Rotorpakets 3 aus dem Rotorzahn 5 und dem einstückig mit dem Rotorzahn 5 ausgeformten Abschnitt 30 des Rotorjochs 4, wobei die Figur 9 zwei und die Figur 10 drei dieser Segmente 7 erster Art wiedergibt, welche zusammengeführt sowie aneinander angeordnet 206 werden und dadurch die in der Figur 10 dargestellte Teilbaugruppe 9 ergeben. Die Teilbaugruppe 9 wird dabei grundsätzlich über eine nicht näher dargestellte Haltevorrichtung gehaltert. Anschließend werden die Segmente 7 der Teilbaugruppe 9 der ersten Art mit den, ebenfalls über die in der Figur 16 angeführte Verfahrensfolge des Vormontierens 100 bereitgestellten Segmenten 8 der zweiten Art formschlüssig verbunden, wodurch die in der Figur 11 dargestellte Vollbaugruppe 10 der Segmente 7, 8 erzeugt 207 wird.

Die Segmente 8 der zweiten Art werden dafür auf die Teilbaugruppe 9 axial aufgebracht, hierbei axial aufgeschoben. Das Aufbringen, im Speziellen Aufschieben, erfolgt dabei derart, dass die jeweilige Verbindungstruktur 21 der Segmente 8 der zweiten Art in die komplementär ausgeformten und somit im Wesentlichen ein Negativ der Verbindungsstruktur 21 dieser Segmente 8 ausformendenden Verbindungsstrukturen 21 der Segmente 7 der Teilbaugruppe 9 der ersten Art eingebracht, hierbei axial eingeschoben werden. Infolge des Aufbringens, im Speziellen Aufschiebens der Segmente 8 der zweiten Art greifen die Verbindungsstrukturen 21 formschlüssig ineinander, wobei in der Vollbaugruppe 10 zwischen den Segmenten 7, 8 beider Arten zumindest teilweise die Verbindung 11, hierbei ein formschlüssiger Anteil der Verbindung 11, etabliert ist. So ist, insbesondere radial und/oder in Umfangsrichtung 19, auch ein struktureller Zusammenhalt der Vollbaugruppe 10 ausgebildet, welcher bei der Teilbaugruppe 9 noch nicht gegeben ist. Lediglich durch axiales Verschieben der Segmente 7, 8 der Vollbaugruppe 10 relativ zueinander ließen sich diese wieder voneinander trennen.

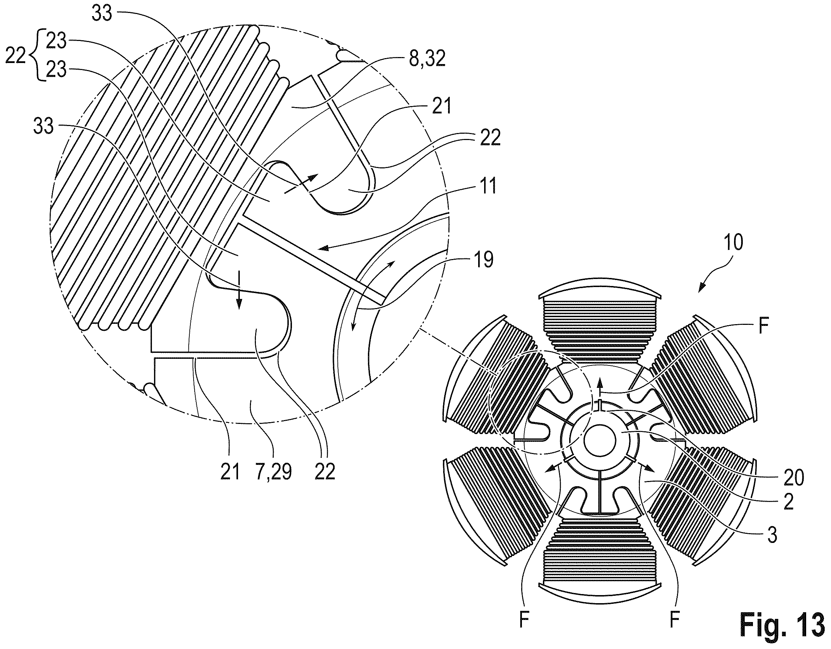

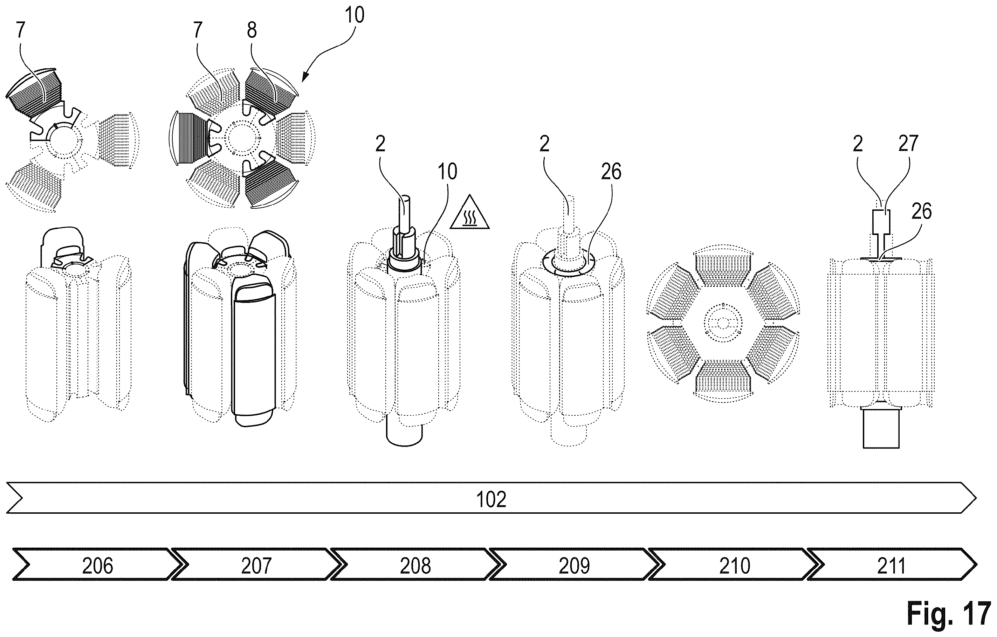

Um auch in axialer Richtung die Verbindung 11, hier ein kraftschlüssiger Anteil der Verbindung 11, zwischen den Segmenten 7, 8 der Vollbraugruppe 10 und somit auch den strukturellen Zusammenhalt des Rotors 1 zu etablieren, wird die Welle-Nabe-Verbindung 20 zwischen Rotorwelle 2 und Rotorpaket 3, hier den Segmenten 7, 8 respektive den Teilstücken 29, 32 des Rotorpakets 3, in der, in der Figur 17 aufgezeigten Verfahrensfolge des Endmontierens 102 ausgebildet, indem die Rotorwelle 2 kraft- und/oder formschlüssig mit der sternförmigen Vollbaugruppe 10 der Segmente 7, 8 beider Arten gefügt 208 wird. Durch das Fügen 208 der Rotorwelle 2 und dem damit erfolgenden Ausbilden der Welle-Nabe-Verbindung 20 zwischen Rotorwelle 2 und Rotorpaket 3, welches von der Vollbaugruppe 10 der Segmente 7, 8 umfasst wird, wie nochmals in der Figur 13 dargestellt, wird die radial auf das Rotorpaket 3 wirkende Kraft F ausgebildet, durch die die Segmente 7, 8 über deren Verbindungsstrukturen 21 gegeneinander verklemmt werden. Durch das Verklemmen ist damit zwischen den Segmenten 7, 8 auch in axiale Richtung die Verbindung 11, hier ein kraftschlüssiger Anteil der Verbindung 11, etabliert.

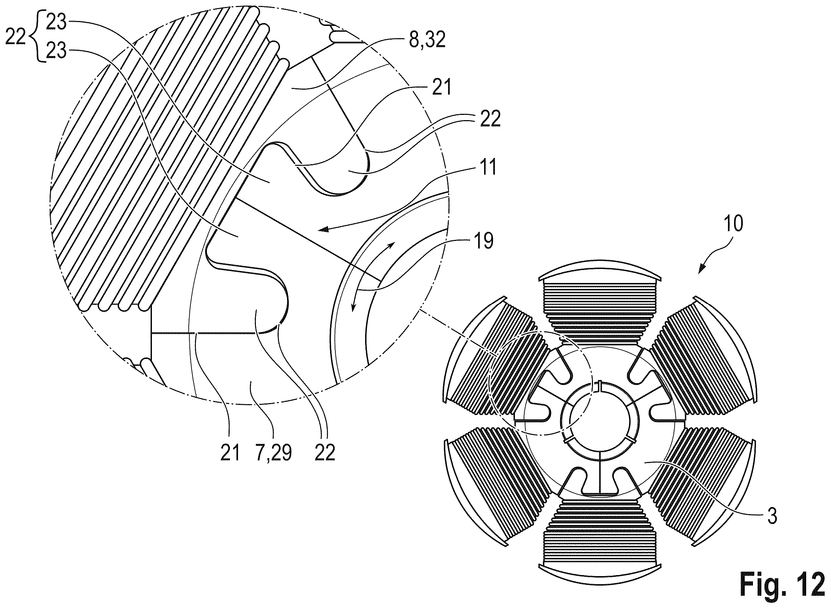

Die Figuren 12 und 13 geben das Verklemmen hierbei nochmals im Detail wieder, wobei die Figur 12 die Vollbaugruppe 10 zunächst ohne gefügte Rotorwelle 2 und somit auf das Rotorpaket 3 und/oder die Segmente 7, 8 beider Arten wirkende Kraft F wiedergibt. Die konkaven und konvexen Verbindungselemente 22 der Verbindungsstrukturen 21 der Segmente 7, 8, verfügen dabei, wie der Detaildarstellung der Figur 12 zu entnehmen ist, bedingt durch das Aufbringen der Segmente 8 auf die Segmente 7 der Teilbaugruppe 9, in der Vollbaugruppe 10 über Spiel zueinander, sodass die Verbindungsstrukturen 21 der Segmente 7, 8 hier die konkaven Verbindungselemente 22 der Segmente 7 der ersten Art und die konvexen Verbindungselemente 22 der Segmente 8 der zweiten Art in der Detaildarstellung der Figur 12 in Umfangsrichtung 19 außen aneinander anliegen.

Durch das Fügen 208 der Rotorwelle 2 mit der Vollbaugruppe 10 und die somit aufgrund der ausgebildeten Welle-Nabe-Verbindung 20 auf das Rotorpaket 2 respektive die Segmente 7, 8 der Vollbaugruppe 10 wirkende Kraft F, wird durch einen in Umfangrichtung 19 wirkenden Anteil der Kraft F eine Spreizung 33 der Segmente 7 und/oder Teilstücke 29 der ersten Art in Umfangsrichtung 19 bewirkt, was, wie in der Detaildarstellung der Figur 13 aufgezeigt, dazu führt, dass diese Segmente 7 und/oder Teilstücke 29 in Umfangsrichtung 19 gegen die Segmente 8 und/oder Teilstücke 32 der zweiten Art gepresst und somit verklemmt werden. Aufgrund der Spreizung 33 liegen die Verbindungsstrukturen 21 der Segmente 7, 8 hier die konkaven Verbindungselemente 22 der Segmente 7 der ersten Art und die konvexen Verbindungselemente 22 der Segmente 8 der zweiten Art im Umfangsrichtung 19 innen aneinander an. Die Spreizung 33 der Segmente 7 der ersten Art wird hierbei dadurch ermöglicht, dass das konvexe Verbindungselement 22 der Verbindungsstruktur 21 der Segmente 7 als ein übergreifendes Verbindungselement 22 aus den Teilverbindungselementen 23 ausgeführt ist. So kann auch auf zusätzliche Klemm- und/oder Fixierelemente verzichtet werden, da die Verbindungselemente 22 selbst als solche Klemm- und/oder Fixierelemente fungieren.

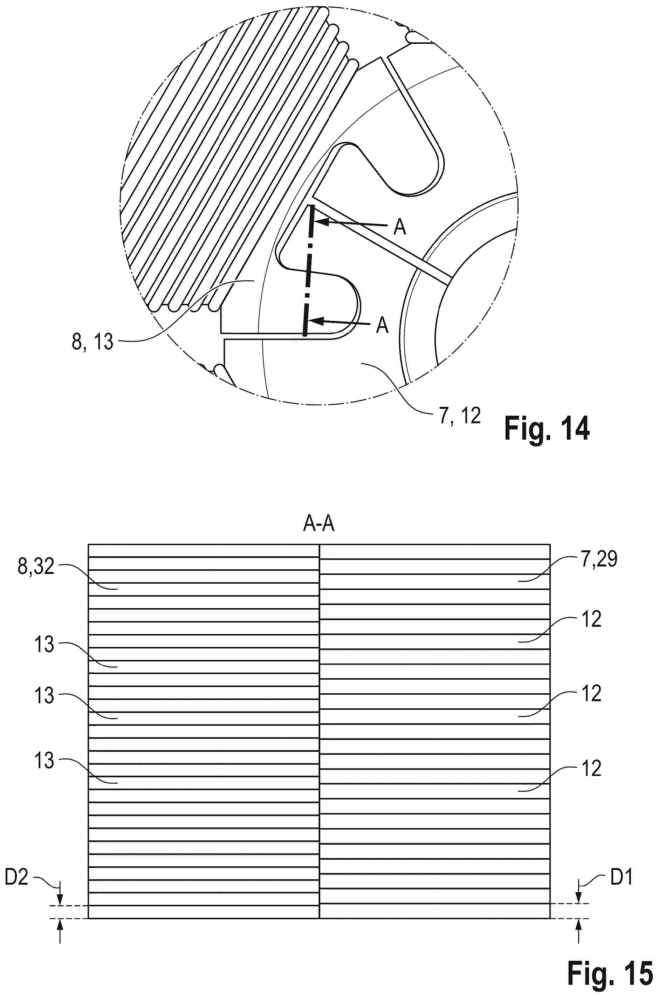

Um zu vermeiden, dass die aus den Lamellen 12, 13 ausgeformten Segmente 7, 8 und/oder Teilstücke 29, 32 des Rotorpakets 3 beispielsweise beim Erzeugen der Vollbaugruppe 10, insbesondere durch Aufbringen der Segmente 8 auf die Segmente 7 radial und/oder in Umfangsrichtung 19 ineinandergleiten, weisen die Lamellen 12, 13 der Segmente 7, 8 je nach Art eine unterschiedliche Lamellendicke D1, D2 auf. Hierbei ist die Lamellendicke D1 der Lamellen 12 der Segmente 7 und/oder der Teilstücke 29 der ersten Art höher, als die Lamellendicke D2 der Lamellen 13 der Segmente 8 und/oder der Teilstücke 32 der zweiten Art. Dies ist hierbei dem in den Figuren 14 und 15 aufgezeigten Schnitt A-A zu entnehmen.

Aus den Figuren 16 bis 19 ist zudem ein im Wesentlichen vollständiger Ablauf einer Ausführungsform des erfindungsgemäßen Verfahrens mit dessen mehreren Verfahrensfolgen und Verfahrensschritten dargelegt.

Hierbei geht aus der Figur 16 zunächst die Verfahrensfolge des Vormontierens 100 hervor, in der zunächst die vorgefertigten Teilstücke 29, 32 des Rotorpakets 3 bereitgestellt 200 und darauffolgend die Endkappen 16 an den axialen Enden der Teilstücke 29, 32 angeordnet 201 werden. Hierauf folgend wird der Nutgrund 34 der Nut 35 respektive die Seitenflächen der Rotorzähne 5, im Speziellen der Zahnschäfte 31 der Teilstücke 29, 32 isoliert 202 und anschließend die Erregerwicklung 6 auf das jeweilige Teilstück 29, 32 gewickelt 203.

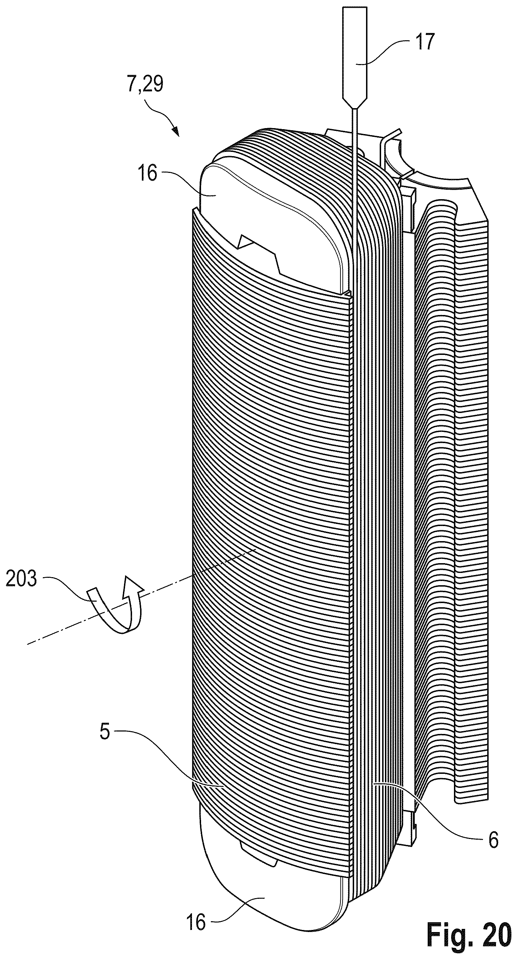

Das Wickeln 203, hierbei im Speziellen das Linearwickeln der Erregerwicklung 6 mittels des Wickelwerkzeugs 17 auf, in diesem Fall, ein Teilstück 29, ist im Detail nochmals in der Figur 20 aufgezeigt. So liegt infolge des Wickelns 203 der Erregerwicklung 6 auf den Rotorzahn 5 das Segment 7 der ersten Art vor. Der Figur 20 ist dabei auch zu entnehmen, dass die Erregerwicklung 6 auf die Endkappen 16 gewickelt 203 wird, sodass ein Kontakt der Erregerwicklungen 6 mit den Kanten zwischen den Seitenflächen und den Stirnflächen des Segments 7 und/oder des Teilstücks 29 und dadurch eine Beschädigung der Erregerwicklung 6 vermieden wird.

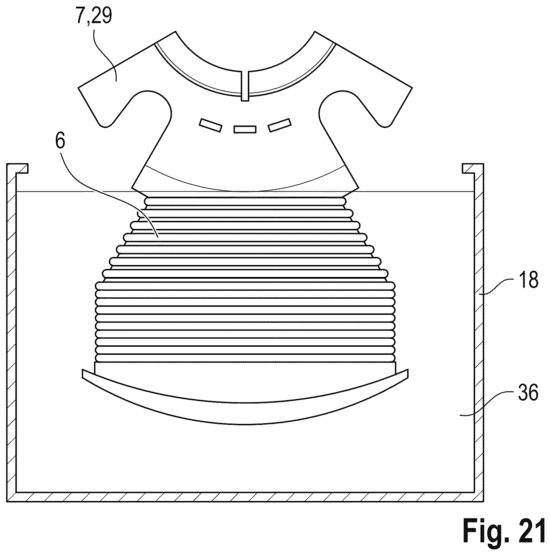

Das Bereitstellen der Segmente 7, 8 über die Verfahrensfolge des Vormontierens 100 beinhaltet je Segment 7, 8, wie der Figur 16 und im Detail der Figur 21 zu entnehmen ist, ein Imprägnieren 204 der auf das separate Teilstück 29, 32 gewickelten Erregerwicklung 6 in dem Imprägnierbad 18. Im Speziellen wird hierbei, wie in der Figur 21 aufgezeigt, die Erregerwicklung 6 des, in diesem Fall, Segments 7 erster Art in das sich im Imprägnierbad 18 befindende Imprägniermedium 36 eingetaucht.

In der auf das Vormontieren 100 folgenden Verfahrensfolge des Prüfens 101 werden die Segmente 7, 8, hierbei die Erregerwicklungen 6, elektrisch geprüft 205.

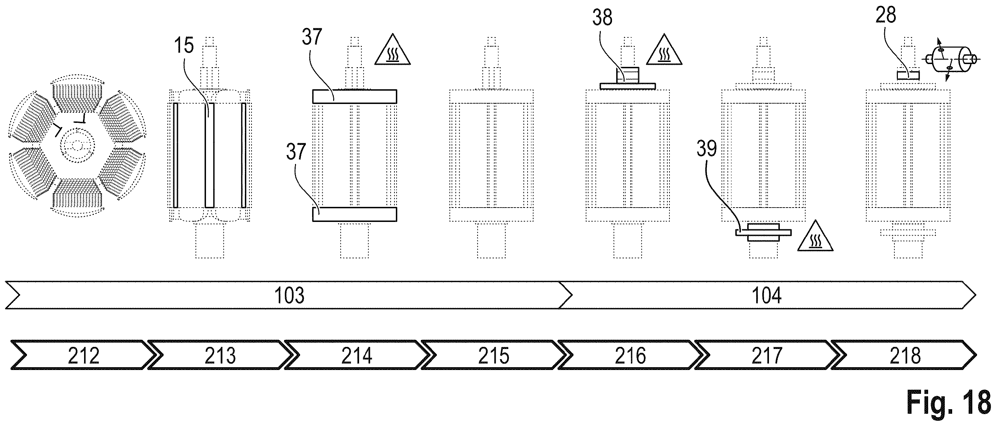

Die Figuren 17 und 18 geben darüber hinaus die Verfahrensfolge des Endmontierens des Rotors 1 wieder, wobei neben den bereits zu den Figuren 8 bis 13 erläuterten Verfahrensschritten des Anordnens 206 der Segmente 7 erster Art zur Teilbaugruppe 9, dem Erzeugen 207 der Vollbaugruppe 10 und dem Fügen 208 der Rotorwelle 2 mit der Vollbaugruppe 10, der Kontaktring 26 an einem axialen Ende des Rotors 1 auf die Rotorwelle 2 aufgebracht 209 und die Erregerwicklungen 6 anschließend mit dem Kontaktring 26 elektrisch verschaltet 210 werden. Hierauf folgend wird zudem der Schleifringübertrager 27 mit der Rotorwelle 2 gefügt 211 und mit dem Kontaktring 26 elektrisch kontaktiert 212.

Im Anschluss daran werden in dieser Ausführungsform des Verfahren die insbesondere in der Figur 2 aufgezeigten Stützkörper 14 sowie die Halteelemente 15 in den Rotor 1 eingebracht 213 und die in der Figur 1 näher dargestellten Armierungsringe 37 mit dem Rotorpaket 2 gefügt 214, wofür diese zuvor erwärmt werden. Nachfolgend wird der Rotor 1 lasermarkiert 215, an einem jeweiligen axialen Ende des Rotors 1 eine zuvor erwärmte Wuchtscheibe 38, 39 auf die Rotorwelle 2 aufgebracht 216, 217 und das Lager 28 bearbeitet 218.

Die sich an das Endmontieren 102 anschließende Verfahrensfolge des Wuchtens 103 des Rotors 1 beinhaltet zudem das Vorwuchten 219, Schleudern 220 sowie Endwuchten 221 des Rotors 1. Hierauf folgen zudem die Verfahrensfolgen des elektrischen Prüfens 104 sowie des Endkontrollierens 105 des Rotors 1, wobei der Rotor 1 entsprechend elektrisch geprüft 222 und endkontrolliert 223 wird.

### Bezugszeichenliste

| | |
|---|---|
| 1 | Rotor |
| 2 | Rotorwelle |
| 3 | Rotorpaket |
| 4 | Rotorjoch |
| 5 | Rotorzahn |
| 6 | Erregerwicklung |
| 7 | Segment |
| 8 | Segment |
| 9 | Teilbaugruppe |
| 10 | Vollbaugruppe |
| 11 | Verbindung |
| 12 | Lamelle |
| 13 | Lamelle |
| 14 | Stützkörper |
| 15 | Halteelement |
| 16 | Endkappe |
| 17 | Wickelwerkzeug |
| 18 | Imprägnierbad |
| 19 | Umfangsrichtung |
| 20 | Welle-Nabe-Verbindung |
| 21 | Verbindungsstruktur |
| 22 | Verbindungselement |
| 23 | Teilverbindungselement |
| 24 | Stoßbereich |
| 25 | Fuß |
| 26 | Kontaktring |
| 27 | Schleifringübertrager |
| 28 | Lager |
| 29 | Teilstück |
| 30 | Abschnitt |
| 31 | Zahnschaft |
| 32 | Teilstück |
| 33 | Spreizung |
| 34 | Nutgrund |
| 35 | Nut |
| 36 | Imprägniermedium |
| 37 | Armierungsring |
| 38 | Wuchtscheibe |
| 39 | Wuchtscheibe |
| 40 | Zahnkopf |
| 100 | Vormontieren |
| 101 | Prüfen |
| 102 | Endmontieren |
| 103 | Wuchten |
| 104 | Prüfen |
| 105 | Endkontrollieren |
| 200 | Bereitstellen |
| 201 | Anordnen |
| 202 | Isolieren |
| 203 | Wickeln |
| 204 | Imprägnieren |
| 205 | Prüfen |
| 206 | Anordnen |
| 207 | Erzeugen |
| 208 | Fügen |
| 209 | Aufbringen |
| 210 | Verschalten |
| 211 | Fügen |
| 212 | Kontaktieren |
| 213 | Einbringen |
| 214 | Fügen |
| 215 | Lasermarkieren |
| 216 | Aufbringen |
| 217 | Aufbringen |
| 218 | Bearbeiten |
| 219 | Vorwuchten |
| 220 | Schleudern |
| 221 | Endwuchten |
| 222 | Prüfen |
| 223 | Endkontrollieren |
| F | Kraft |
| D1 | Lamellendicke |
| D2 | Lamellendicke |

## Patentansprüche

1. Rotor (1) eines Elektromotors, wobei der Rotor (1) ein auf einer Rotorwelle (2) des Rotors (1) angeordnetes Rotorpaket (3) und das Rotorpaket (3) ein Rotorjoch (4) sowie eine Mehrzahl Rotorzähne (5) umfasst, welche jeweils eine Erregerwicklung (6) tragen, hierbei der Rotor (1) zudem wenigstens zwei zumindest das Rotorpaket (3) in Umfangsrichtung (19) des Rotors (1) zergliedernde Segmente (7, 8) aufweist, wobei ein jeweiliges Segment (7, 8) wenigstens einen Rotorzahn (5) mitsamt dessen Erregerwicklung (6) sowie zumindest eine Teilmenge der Segmente (7, 8) einen mit einem jeweiligen Rotorzahn (5) des Segments (7, 8) einteilig ausgeführten Abschnitt (30) des Rotorjochs (4) umfasst und die Segmente (7, 8) miteinander über eine kraft- und/oder formschlüssige Verbindung (11) gefügt sind, **dadurch gekennzeichnet, dass** die Verbindung (11) zumindest teilweise dadurch etabliert ist, dass die Segmente (7, 8) durch eine auf das Rotorpaket (3) wirkende Kraft (F) gegeneinander verklemmt sind, wobei die Kraft (F) aufgrund einer zwischen Rotorpaket (3) und Rotorwelle (2) vorliegenden Welle-Nabe-Verbindung (20) ausgebildet ist.

2. Rotor (1) nach Anspruch 1, **dadurch gekennzeichnet, dass** die Segmente mindestens zwei verschiedenen Arten von Segmenten (7, 8) zugehören, welche je nach Art eine sich zumindest teilweise unterscheidende Form aufweisen.

3. Rotor (1) nach Anspruch 1 oder 2, **dadurch gekennzeichnet, dass** die sich zumindest teilweise unterscheidende Form der Segmente (7, 8) verschiedener Arten wenigstens zum Teil durch eine je Art unterschiedlich ausgeformte Verbindungsstruktur (21) eines jeden Segments (7, 8) ausgestaltet ist, wobei die Verbindungsstrukturen (21) der Segmente (7, 8) der jeweiligen Arten komplementär zueinander ausgeformt sind und wenigstens bereichsweise formschlüssig ineinandergreifen.

4. Rotor (1) nach zumindest einem der vorangehenden Ansprüche, **dadurch gekennzeichnet, dass** eine jeweilige Verbindungsstruktur (21) wenigstens ein konkav und/oder konvex ausgeformtes Verbindungselement (22) und/oder Teilverbindungselement (23) aufweist, wobei die Verbindungsstrukturen (21) der Segmente (7, 8) der jeweiligen Arten zumindest anteilig über das zumindest eine Verbindungselement (22) und/oder Teilverbindungselement (23) komplementär zueinander ausgeformt sind.

5. Rotor (1) nach zumindest einem der vorangehenden Ansprüche, **dadurch gekennzeichnet, dass** zwei jeweils aneinander anliegende Teilverbindungselemente (23) zweier in einem Stoßbereich (24) aneinander anliegender Segmente (7, 8) einer Art ein übergreifendes Verbindungselement (22) ausformen.

6. Rotor (1) nach zumindest einem der vorangehenden Ansprüche, **dadurch gekennzeichnet, dass** Segmente (7, 8) zumindest zweier Arten das Rotorjoch (4) des Rotorpakets (3) zumindest teilweise ausformend an der Rotorwelle (2) und seitenflächig aneinander anliegen, wobei deren Verbindungsstrukturen (21) bereichsweise formschlüssig ineinandergreifen.

7. Rotor (1) nach zumindest einem der vorangehenden Ansprüche, **dadurch gekennzeichnet, dass** ausschließlich Segmente (7, 8) einer Art das Rotorjoch (4) des Rotorpakets (3) zumindest teilweise ausformend an der Rotorwelle (2) sowie in einem Stoßbereich (24) dieser Segmente (7, 8) aneinander und zudem Segmente (7, 8) einer weiteren Art an diesen Segmenten (7, 8) anliegen, wobei die Verbindungsstrukturen (21) der Segmente (7, 8) bereichsweise formschlüssig ineinandergreifen und ein die Verbindungsstruktur (21) zumindest teilweise umfassender Fuß (25) eines jeweiligen Segments (7, 8) der weiteren Art durch angrenzende Segmente (7, 8) seiten- und fußflächig eingefasst ist.

8. Rotor (1) nach zumindest einem der vorangehenden Ansprüche, **dadurch gekennzeichnet, dass** zumindest eine Teilmenge der Erregerwicklungen (6) mit einem an einem axialen Ende des Rotors (1) auf die Rotorwelle (2) aufgebrachten Kontaktring (26) elektrisch verschaltet und/oder verbunden sind und der Kontaktring (26) elektrisch mit wenigstens einem Schleifringübertrager (27) kontaktiert ist.

9. Rotor (1) nach zumindest einem der vorangehenden Ansprüche, **dadurch gekennzeichnet, dass** an zumindest einem radialen und/oder stirnseitigen Ende eines Segments (7, 8) eine Endkappe (16) angeordnet ist.

10. Rotor (1) nach zumindest einem der vorangehenden Ansprüche, **dadurch gekennzeichnet, dass** zwischen den Erregerwicklungen (6) benachbarter Rotorzähne (5) zumindest ein Stützkörper (14) zum Stützen der Erregerwicklungen (6) angeordnet ist.

11. Rotor (1) nach zumindest einem der vorangehenden Ansprüche, **dadurch gekennzeichnet, dass** die Erregerwicklungen (6) aus Aluminium oder einer Aluminiumlegierung bestehen.

12. Verfahren zur Fertigung des Rotors (1) nach zumindest einem der vorangehenden Ansprüche, **dadurch gekennzeichnet, dass** Segmente (7, 8) verschiedener Art über eine Verfahrensfolge des Vormontierens (100) des Rotors (1) bereitgestellt werden und in einer, insbesondere mittelbar darauffolgenden Verfahrensfolge des Endmontierens (102) des Rotors (1) aus Segmenten (7, 8) einer Art zunächst eine Teilbaugruppe (9) dieser Segmente (7, 8) angeordnet (206) und anschließend durch ein formschlüssiges Verbinden von Segmenten (7, 8) einer weiteren Art mit den Segmenten (7, 8) der Teilbaugruppe (9) eine Vollbaugruppe (10) der Segmente (7, 8) erzeugt (207) wird.

13. Verfahren nach zumindest einem der vorangehenden Ansprüche, **dadurch gekennzeichnet, dass** die Welle-Nabe-Verbindung (20) zwischen Rotorwelle (2) und Rotorpaket (3) in der Verfahrensfolge des Endmontierens (102) ausgebildet wird, indem die Rotorwelle (2) kraft- und/oder formschlüssig mit der Vollbaugruppe (10) der Segmente (7, 8) gefügt (208) wird.

14. Verfahren nach zumindest einem der vorangehenden Ansprüche, **dadurch gekennzeichnet, dass** das Bereitstellen der Segmente (7, 8) über die Verfahrensfolge des Vormontierens (100) je Segment (7, 8) ein Wickeln (203) der Erregerwicklung (6) auf ein separates, einen Rotorzahn (5) und einen Abschnitt (30) des Rotorjochs (4) umfassendes Teilstück (29, 32) des Rotorpakets (3) beinhaltet.

15. Verfahren nach zumindest einem der vorangehenden Ansprüche, **dadurch gekennzeichnet, dass** das Bereitstellen der Segmente (7, 8) über die Verfahrensfolge des Vormontierens (100) je Segment (7, 8) ein Imprägnieren (204) der auf das separate Teilstück (29, 32) gewickelten Erregerwicklung (6) beinhaltet.
